# EUROPÄISCHE PATENTSCHRIFT

(11) **EP 1 382 415 B1**
(45) Veröffentlichungstag und Bekanntmachung des Hinweises auf die Patenterteilung: **16.08.2006**
(21) Anmeldenummer: 03010617.3
(22) Anmeldetag: 12.05.2003
(51) Int. Cl.: B23Q 1/38, F16F 15/027, F16C 29/02

(54) **Aktive Schwingungsdämpfung in einer Werkzeugmaschine**
Active vibration damping in a machine tool
Amortissement actif de vibrations dans une machine-outil

(30) Priorität: 18.07.2002 DE 10232637; 10.10.2002 DE 10247354
(43) Veröffentlichungstag der Anmeldung: 21.01.2004
(73) Patentinhaber: P & L GmbH & Co. KG, 20148 Hamburg (DE)
(72) Erfinder: Röders, Jürgen, 20148 Hamburg (DE)
(74) Vertreter: Weber, Joachim

(56) Entgegenhaltungen:
- WO-A-02/45891
- WO-A-94/07045
- FR-A- 2 574 154
- GB-A- 906 818
- US-A- 3 032 142
- US-A- 4 636 095
- US-A- 5 238 308
- US-A- 5 447 375
- DATABASE WPI Week 8333 Derwent Publications Ltd., London, GB; AN 1983-740090 XP002261643 & SU 965 709 A (OSBOE K BYURO STANKOSTR), 25. Oktober 1982 (1982-10-25)

## Beschreibung

Die Erfindung bezieht sich auf eine aktive Schwingungsdämpfung in einer Werkzeugmaschine und im Speziellen sowohl auf ein Verfahren zur Schwingungsdämpfung als auch auf eine Vorrichtung zur Durchführung des Verfahrens.

Bei der mechanischen Bearbeitung von Werkstücken auf Werkzeugmaschinen treten häufig unerwünschte Schwingungen auf, die zu Maßungenauigkeiten und/oder schlechten Oberflächenqualitäten des Werkstücks führen können.

Derartige Schwingungen können beispielsweise durch den Bearbeitungsprozess hervorgerufen sein. So besteht bei Fräswerkzeugen das Problem, dass die einzelnen Schneiden oder Zähnen des Werkzeugs nacheinander in Eingriff gelangen, sodass hierdurch Schwingungen erzeugt werden. Diese äußern sich beispielsweise als Rattermarken auf der Oberfläche des Werkstücks. Sie führen jedoch auch zu Schwingungen der Bauelemente der Werkzeugmaschine selbst.

Bei dynamischen Werkzeugmaschinen, beispielsweise Portalfräsmaschinen oder ähnlichem, können Schwingungen zusätzlich durch die Bewegungen der einzelnen Bauelemente oder Baugruppen der Werkzeugmaschine selbst hervorgerufen werden. Die kurzen Bearbeitungszeiten erfordern sehr hohe Verfahrgeschwindigkeiten der einzelnen Spindeln, Supports und ähnlicher Baugruppen. Weiterhin besteht bei Werkstücken, die mit sehr kleinen Radien gefertigt werden sollen, die Notwendigkeit, die Bahn des Werkzeugs oder des Werkstückes in sehr kurzen Zeiträumen zu ändern, um die gewünschten Krümmungsänderungen oder Richtungsänderungen realisieren zu können. Dabei müssen die Verfahrgeschwindigkeiten in den Achsen so schnell erfolgen, dass diese stoßweise Belastungen auf die Werkzeugmaschine bewirken. Hierdurch werden ebenfalls Schwingungen angeregt.

Als besonders ungünstig erweist es sich, wenn die Schwingungsanregung mit der Eigenfrequenz der Werkzeugmaschine zusammenfällt. Derartige unerwünschte Frequenzen können sich sowohl durch den Bearbeitungsprozess selbst als auch durch das dynamische Verfahren der Werkzeugmaschine bzw. deren Komponenten ergeben. Das Ergebnis kann ein Aufschwingen mit besonders großen Maßabweichungen und schlechten Oberflächenqualitäten sein.

Aus dem Stand der Technik ist es bekannt, derartige Problematiken dadurch zu minimieren, dass die Werkzeugmaschinen möglichst steif ausgelegt werden und möglichst keine Eigenfrequenzen im niedrigen Frequenzbereich aufweisen. Abgesehen von den Fertigungskosten für derartige Werkzeugmaschinen ist es nicht immer möglich, das Auftreten dieser unerwünschten Schwingungen zu vermeiden oder zu unterdrücken.

Aus dem Stand der Technik sind weiterhin Werkzeugmaschinen vorbekannt, welche als Führungselemente sogenannte "hydrostatische Führungen" aufweisen. Diese umfassen beispielsweise bei einem Bauteil eine ebene Funktionsfläche, während bei dem anderen Werkzeug eine Tasche eingearbeitet ist, welche von Öl durchflossen wird. Die Tasche wird von seitlichen Stegen begrenzt, die zu dem anderen Bauteil einen Spalt bilden, durch welches das Öl austritt.

Durch entsprechende Druckbeaufschlagung des in den Taschen befindlichen Öls ergibt sich somit ein Gleiten der beiden Bauteile aufeinander mittels des Ölfilms.

Bei zunehmender Last verringert sich der Spalt entsprechend. Durch mechanische Maßnahmen wird dabei beim Stand der Technik der Öldruck entsprechend erhöht, um diese Mehrbelastung aufzufangen. Sinkt die Belastung, so vergrößert sich der Spalt entsprechend. Der Öldruck in der Tasche wird daraufhin verringert. Die vorbekannten Lösungen führen somit dazu, dass die Breite des Spaltes (worunter sein freier Strömungsquerschnitt zu verstehen ist) möglichst konstant gehalten wird. Hieraus ergibt sich, dass Schwingungen der einzelnen Bauteile oder Bauelemente/Baugruppen nicht berücksichtigt werden können.

Es ist somit bekannt, bei hydrostatischen Führungen eine höchstmögliche Steifigkeit zu erzeugen. Dazu wird bei erhöhter Belastung der Druck des in die Tasche zugeführten Öls so stark erhöht, dass trotz des aufgrund der höheren Belastung kleineren Spaltes ein größerer Volumenstrom durch den verengten Spalt gedrückt wird. Die Druckerhöhung des zugeführten Öls reicht aber nicht aus, um eine erhöhte Belastung so auszuregeln, dass der Spalt in endlicher Zeit wieder die gleiche Größe annimmt. Die erhöhte Belastung führt also zu einer bleibenden, wenn auch aufgrund des größeren Volumenstroms geringen, Veränderung des Spaltes. Die bekannte Regelung passt den Druck der Belastung der Tasche an und erhöht dadurch die Steifigkeit der Führung. Der Spalt verändert sich aber aufgrund von unterschiedlichen Belastungen.

Die FR 2 574 154 A, zu welcher eine parallele deutsche Schrift DE 34 44 344 A1 existiert, bezieht sich auf ein Verfahren zur Regelung der Lastaufnahme an Gleitschuhlagerungen. Dabei wird das Problem angesprochen, dass sich der Lagerspalt in Abhängigkeit von der Lastaufnahme verändert. Durch die Zuführung einer zusätzlichen Ölmenge ergibt sich durch den Abströmwiderstand des Öls eine eindeutige Relation zur Lastaufnahme. Dieser Abströmwiderstand bzw. der sich ergebende Öldruck bilden eine Stellgröße für die Anpressung bzw. Positionierung eines Entlastungsgleitschuhs.

Die US 4,636,095 A bezieht sich auf ein rotierendes Lager, wobei eine Schwingungskompensation auf mechanische Weise durch einen Hilfskolben erfolgt, welcher zu einem konstanten Lagerspalt beiträgt.

Die US 3,032,142 A hat zum Ziel, die Öldicke oder Schmierfilmdicke konstant zu halten. Im Einzelnen ist hierzu ein Sensor vorgesehen, der die Höhe des Spaltes misst und entsprechend einen Motor steuert, welcher wiederum die Ölmenge beeinflusst. Eine derartige Vorgehensweise ist ebenfalls nicht zur Schwingungsdämpfung geeignet, sie dient nur zur statischen Beeinflussung des Lagerspalts. Aus diesem Grunde gibt die Druckschrift auch keinerlei Hinweis auf Schwingungsdämpfungs-Aspekte.

Die US 5,238,308 A bezieht sich auf Drehlager, bei welchen ein konstanter Lagerspalt gewünscht wird. Dieser wird durch Änderungen der Dimensionierung der äußeren Lagerschale erzielt. Die Druckschrift gibt dem Fachmann keinerlei Hinweis auf longitudinale Führungen und/oder auf dynamische Schwingungsdämpfungen.

Der Erfindung liegt die Aufgabe zugrunde, ein Verfahren sowie eine Vorrichtung zu schaffen, um bei einer Werkzeugmaschine die Bearbeitungspräzision und die Steifigkeit zu verbessern.

Erfindungsgemäß wird die Aufgabe durch die Merkmale der beiden unabhängigen Ansprüche gelöst, die jeweiligen Unteransprüche zeigen weitere vorteilhafte Ausgestaltungen der Erfindung.

Erfindungsgemäß ist somit vorgesehen, dass der Öldruck in der Tasche in Abhängigkeit von den auftretenden Belastungen der hydrostatischen Führung geregelt wird.

Die Erfindung ermöglicht somit eine aktive Schwingungsdämpfung in der Werkzeugmaschine mittels der hydrostatischen Führungen. Der Öldruck in den einzelnen Taschen wird dabei so geregelt, dass entstehende Schwingungen der Werkzeugmaschine aktiv gedämpft werden.

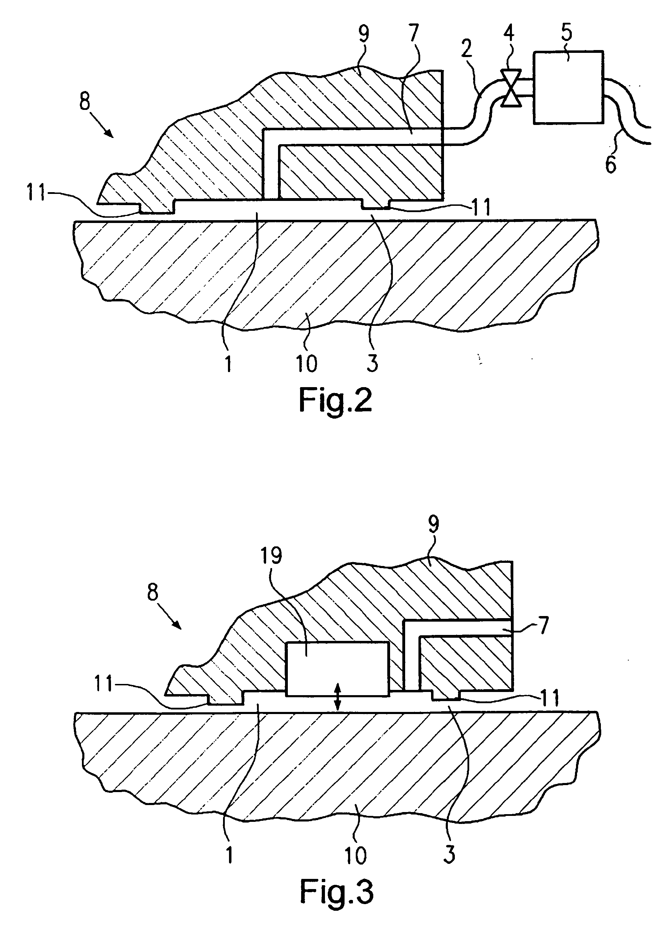

Bei einer aktiven Regelung des Volumenstroms und einer ständigen Messung der Spaltgröße kann erfindungsgemäß der Volumenstrom so geregelt werden, dass bei einer Belastungsveränderung die zunächst resultierende Veränderung des Spaltes in endlicher Zeit so ausgeregelt wird, dass der Spalt trotz der erhöhten Belastung wieder sein ursprüngliches Maß annimmt, z.B. mit Hilfe eines PID-Reglers. Messgröße ist der Spalt, Stellgröße der Volumenstrom, der abhängig von der Belastung so geregelt wird, dass der Spalt bei Belastungsänderungen in endlicher Zeit wieder ein konstantes Maß annimmt. Statt die Spaltgröße zu messen, kann auch der Taschendruck als Eingangssignal verwendet werden, da es möglich ist, für eine gegebene Taschengeometrie bei konstantem Spaltmaß für unterschiedliche Belastungen der Führung zu ermitteln, welcher Volumenstrom mit welchem Druck erforderlich ist, um bei konstantem Spaltmaß unterschiedliche Belastungen aufzufangen. Der Volumenstrom wird stets so geregelt, dass er mit einem für konstantes Spaltmaß korrespondierendem Druck übereinstimmt. Der Volumenstrom kann dazu z.B. über ein Proportionalventil, wie in Fig. 2 dargestellt, geregelt werden.

Erfindungsgemäß ist es auch möglich, den Ölstrom durch die Breite des Spalts zu regeln.

Erfindungsgemäß besteht somit ein Zusammenhang zwischen dem Öldruck in der Tasche sowie dem durch den Spalt austretenden Öl-Volumenstrom. Als Störgröße erfolgt die Belastung durch die mit den jeweiligen Frequenzen auftretenden Kräfte. Diese bilden die entsprechende Störgröße. Ohne äußeren Einfluss würde sich, wie auch beim Stand der Technik bekannt, der Druck in der Tasche sowie der Volumenstrom in Abhängigkeit von der auftretenden Belastung entsprechend ändern, wobei sich die Spaltbreite dann entsprechend ergibt. Aus genau diesen Vorgängen resultiert dann das unerwünschte Schwingungsverhalten. Durch die erfindungsgemäß vorgesehene aktive Beeinflussung des Drucks und/oder des Volumenstroms ist es möglich, zum einen die Spaltbreite konstant zu halten und zum anderen unerwünschte Schwingungen zu dämpfen.

Erfindungsgemäß ist es somit möglich, entweder den Ölstrom in die Tasche oder das Ölvolumen in der Tasche zu regeln. Beides erfolgt durch eine überlagerte Regelung, welche als Messgröße beispielsweise den Öldruck in der Tasche oder die Breite des Spaltes zugrunde legt.

Es versteht sich, dass erfindungsgemäß sowohl einzelne Taschen der hydrostatischen Führung, als auch sämtliche Taschen aller hydrostatischen Führungen einer gesamten Werkzeugmaschine oder eines gesamten Systems geregelt werden können.

Erfindungsgemäß können entweder Abstandssensoren oder Drucksensoren in den einzelnen Taschen eingesetzt werden, die den aktuellen Zustand in der jeweiligen Tasche exakt erfassen. Über sehr schnelle Regelventile ist es somit möglich, den Volumenstrom des Öls in die einzelnen Taschen entsprechend zu bestimmen und zu regeln.

Besonders günstig ist es dabei, wenn vor dem jeweiligen Regelventil ein Druckspeicher vorgesehen ist, um ausreichend Öl mit hohem Druck für die Regelung zur Verfügung zu stellen.

Die erfindungsgemäße Schwingungsdämpfung kann in bevorzugter Weise der Erfindung auch andere Daten zugrunde legen. So ist es beispielsweise möglich, weitere Sensoren vorzusehen, beispielsweise Beschleunigungsaufnehmer, die an anderen Orten der Werkzeugmaschine befestigt sind.

So ist es beispielsweise möglich, Beschleunigungsaufnehmer am unteren Ende der Z-Achse einer Portalmaschine anzuordnen. Auf diese Weise kann z.B. eine unerwünschte Pendelbewegung (Schwingung) in der Z-Achse aktiv unterdrückt werden.

Ein zweiter wesentlicher Aspekt der Erfindung ist die gleichzeitige Betrachtung mehrerer Taschen in einer Steuerung (einem Regler). Die bisherigen Lösungen versuchen eine möglichst hohe Steifigkeit der Führung herzustellen, indem die Taschen einzeln unabhängig voneinander geregelt werden. Bei der Erfindung werden sämtliche Taschen, die ein Maschinenelement lagern, z.B. den Maschinentisch für das Werkstück oder die Z-Achse der Portalmaschine, gleichzeitig betrachtet und so angesteuert, dass das Maschinenelement insgesamt schwingungsfrei und nahezu unendlich steif gelagert wird und/oder von dem Maschinenelement ausgehende Schwingungen, die durch die Bearbeitung oder die dynamische Verfahrbewegung der Maschine angeregt werden, aktiv durch Anpassung/Modulation der Taschendrücke gedämpft werden.

In einer weiteren Variante der Erfindung ist es somit möglich, sämtliche Zustandsdaten (Spaltbreite und/oder Öldruck oder weitere Daten) der einzelnen Taschen der einzelnen hydrostatischen Führungen oder Lagerungen der Werkzeugmaschine in der erfindungsgemäßen Schwingungsdämpfungs-Regelung zu erfassen. Da weiterhin zusätzlich der Bewegungsablauf von Werkstück und Werkzeug und damit die Bewegungen der einzelnen Achsen der Werkzeugmaschine bekannt sind, kann die erfindungsgemäße Regelung die sich dabei ergebenden Beschleunigungen und die daraus resultierenden dynamischen Belastungen der einzelnen Taschen der einzelnen hydrostatischen Führungen vorherbestimmen. Durch entsprechende Regelung des Öldrucks in den einzelnen Taschen können die auftretenden Belastungen aktiv kompensiert werden, bevor diese zu Veränderungen der Spaltgrößen in den Taschen führen. Dies bedeutet, dass die erfindungsgemäße Regelung den Öldruck bzw. das Ölvolumen aktiv exakt so einstellt, dass das Auftreten unerwünschter Schwingungen von vornherein vermieden wird. Die sich durch die Bewegungsvorgänge und die Beschleunigungen ergebende Mehrbelastung kann somit ohne jegliche Veränderung des Spaltes aufgefangen werden.

Weiterhin ist es erfindungsgemäß möglich, den Öldruck in den Taschen so zu regeln, dass bei einem bekannten Schwingungverhalten der Werkzeugmaschine bzw. der Bauteile oder Maschinenelemente der Werkzeugmaschine ein Auftreten von Schwingungen aktiv unterdrückt wird. Dies bedeutet, dass beispielsweise der Öldruck in den einzelnen Taschen aktiv so verändert wird, dass das Eigen-Schwingungsverhalten der Werkzeugmaschine die Spaltbreiten oder Spaltgrößen entweder nicht beeinflusst oder die auftretenden Schwingungen sehr schnell gedämpft werden können. Im ersteren Falle wird das Auftreten der unerwünschten Schwingungen im Vorfeld vermieden.

Dabei kann erfindungsgemäß auch berücksichtigt werden, dass sich bei einigen Konzepten von Werkzeugmaschinen das Verhalten der einzelnen Achsen überlagert. Bei einer Portalmaschine wirkt z.B. eine Pendelbewegung der Z-Achse auf die Führung in Z-Richtung und auf die Führung in Y-Richtung. Eine aktive Kompensation für eine Pendelbewegung regelt somit erfindungsgemäß den Druck in den Taschen beider Führungen (Y- und Z-Richtung). Wesentlich ist erfindungsgemäß somit, dass bei programmgesteuerten Maschinen der Bewegungsablauf der einzelnen Achsen durch das Programm, z.B. das Fräsprogramm auf einer Fräsmaschine, bekannt ist. Auf Grundlage des Programmes ist es möglich, den Bewegungsablauf der einzelnen Maschinenelemente zu bestimmen und die daraus resultierenden Belastungsveränderungen in den einzelnen Taschen, die das jeweilige Maschinenelement lagern, zu berechnen. Mit Hilfe dieser Berechnung können die Volumenströme in die das jeweilige Maschinenelement lagernden Taschen so vorgesteuert werden, dass die daraus resultierenden Veränderungen der Taschendrücke die sich aus dem Maschinenprogramm ergebenden Belastungsveränderungen ausgleichen und das Spaltmaß in allen Taschen konstant halten. Die erforderlichen Berechnungen können bei leistungsfähigen Maschinensteuerungen online, d.h. während der Abarbeitung der Programme, erfolgen. Die Maschinensteuerung steuert dann die Verfahrbewegungen der Maschinenachsen und gleichzeitig die Volumenströme in die Taschen der hydrostatischen Führungen.

Erfindungsgemäß ergeben sich hinsichtlich der Vorrichtung unterschiedliche Lösungsmöglichkeiten. Abgesehen von der Verwendung von Regelventilen ist es auch möglich, das jeweilige Arbeitsvolumen der Tasche selbst zu beeinflussen. Dies kann beispielsweise durch Kolben-Zylinder-Einheiten oder durch entsprechende Piezoelemente erfolgen. Diese sprechen sehr schnell an und führen zu einer Veränderung des Arbeitsvolumens der Tasche und damit zu einer Druckveränderung des in der Tasche befindlichen Öls.

Weiter kann es vorteilhaft sein, bei Maschinenelementen, die aufgrund des Bewegungsablaufes, z.B. einem seitlichen Beschleunigungsvorgang der Z-Achse einer Portalmaschine, aufgrund ihrer endlichen Steifigkeit verformt werden, die oben erwähnte Vorsteuerung zu übersteuern, d.h. die Spaltgrößen der Taschen, die das Maschinenelement lagern, gezielt so zu verändern, dass die durch die Verformung des jeweiligen Maschinenelementes entstehenden Bearbeitungsungenauigkeiten auf der Maschine minimiert werden.

Erfindungsgemäß erweist es sich als besonders vorteilhaft, wenn der Öldruck und/oder der Ölstrom und/oder das Ölvolumen mehrerer Taschen mehrerer hydrostatischer Führungen einer Werkzeugmaschine mittels einer gemeinsamen Regelung geregelt werden. Es ist hierdurch insbesondere möglich, Schwingungen von Bauteilen, sei es von Bauteilen der Werkzeugmaschine oder von Werkstücken, aktiv zu dämpfen. Hierbei kann die erfindungsgemäße Regelung bauliche Gegebenheiten berücksichtigen. Die auftretenden Schwingungen können entweder Schwingungen der Bauteile sein, die von außen angeregt sind oder es kann sich um Schwingungen der Bauteile oder der Werkstükke selbst handeln. Erfindungsgemäß wird somit die Möglichkeit eröffnet, ein derartiges Schwingungsverhalten entweder zu messen und in Echtzeit auszuregeln oder entsprechend zu steuern und bei Arbeitsbedingungen der Werkzeugmaschine, die das Auftreten von Schwingungen hervorrufen, die in einem Speicher festgelegten Werte zu berücksichtigen und die Regelung entsprechend anzupassen.

Dabei ist es erfindungsgemäß besonders vorteilhaft, wenn die einzelnen Taschen unabhängig voneinander geregelt werden. Somit können die entsprechenden hydrostatischen Führungen hinsichtlich ihres Eigenverhaltens Berücksichtigung finden. Es kann dabei auch berücksichtigt werden, welche Kräfte und Schwingungen auf die einzelnen hydrostatischen Führungen unabhängig voneinander einwirken.

Erfindungsgemäß wird somit die Möglichkeit eröffnet, die auftretenden Schwingungen entweder zu berechnen und die Werte in einem Speicher bereitzustellen, oder in Echtzeit zu messen und mittels der Regelung entsprechend zu verarbeiten.

Erfindungsgemäß ist es somit möglich, ein Maschinenelement hochsteif zu lagern, da die erfindungsgemäße Regelung, Fertigungsungenauigkeiten, Maßungenauigkeiten oder Ähnliches durch die entsprechende Regelung ausgleichen kann. Auch eröffnet sich hierdurch die Möglichkeit, weitaus weniger präzise und somit kostengünstigere hydrostatische Führungen zu verwenden und deren präzises Arbeiten mittels der erfindungsgemäßen Regelung zu realisieren. Sowohl von außen angeregte Schwingungen als auch Eigenschwingungen können somit aktiv gedämpft werden, indem die erfindungsgemäße Regelung dem Schwingungsverhalten des Maschinenelements aktiv durch entsprechende Ansteuerung der einzelnen Taschen entgegenwirkt und diese dämpft.

Erfindungsgemäß ist es weiterhin möglich, Maßungenauigkeiten, insbesondere hinsichtlich der Spalthöhen der hydostatischen Führungen sowie sonstige Fehler der Führungsbahnen auszugleichen. Hierdurch wird beispielsweise jede der Führungsbahnen der hydrostatischen Führungen auf einem Messtisch (beispielsweise Granitstein) vermessen. Die entsprechenden Werte werden in einem Speicher hinterlegt, auf welchen die Regelung zugreifen kann. Während des Bearbeitungsvorganges kann somit die erfindungsgemäße Regelung auf den Speicher zugreifen. Sie vergleicht die gespeicherten Werte mit den Sollwerten und kann sofort, beispielsweise in Abhängigkeit von einer Weg-Koordinate der hydrostatischen Führung, reagieren, um entsprechend die Maßabweichungen oder Fehler der hydrostatischen Führung zu kompensieren. Ein hydrostatischer gelagerter Maschinentisch beispielsweise würde dann mittels der erfindungsgemäßen Regelung auf einer theoretisch idealen Führungsbahn verfahren und nicht, wie beim Stand der Technik bekannt, den geringen Fehlern oder Abweichungen der Führungsbahn folgen. Leichte seitliche Verlagerungen, beispielsweise des Führungstisches zu der Führungsbahr oder kleine Verkippungen, die als Fehler auftreten könnten, können somit erfindungsgemäß dadurch kompensiert werden, dass der Tisch entgegenwirkend verlagert oder verkippt wird. Das Resultat führt zu der Bewegung auf der theoretisch idealen Führungsbahn. In Abhängigkeit von der Präzision und Schnelligkeit der erfindungsgemäßen Regelung kann somit die sich ergebende Bahn des Tisches oder Bauteils der Werkzeugmaschine beliebig nahe an eine ideale Bewegungsbahn angenähert werden.

Als Ergebnis stellt sich erfindungsgemäß ein, dass unter Verwendung des erfindungsgemäßen Verfahrens ein so hohes Maßan Präzision erzielt werden kann, wie dies bei bekannten Werkzeugmaschinen entweder nicht möglich ist oder nur mit einem sehr hohen Kostenaufwand realisiert werden kann.

Es versteht sich, dass die erfindungsgemäß beschriebenen Fehler-Kompensationen auch thermisch verursachte Fehler der Führungsbahnen kompensieren können.

Die Erfindung ist nicht auf longitudinale hydrostatische Führungen beschränkt, vielmehr ist das erfindungsgemäße Verfahren für alle hydrostatisch gelagerten Maschinenelemente einsetzbar.

Im Folgenden wird die Erfindung anhand von Ausführungsbeispielen in Verbindung mit der Zeichnung beschrieben. Dabei zeigt:
- Fig. 1: eine perspektivische, vereinfachte Darstellung einer Werkzeugmaschine zur Verwendung der erfindungsgemäßen Schwingungsdämpfung,
- Fig. 2: eine Teil-Schnittansicht einer erfindungsgemäßen hydrostatischen Führung in schematisierter Darstellung, und
- Fig. 3: eine Ansicht, ähnlich Fig. 2, eines weiteren Ausführungsbeispiels der hydrostatischen Führung.

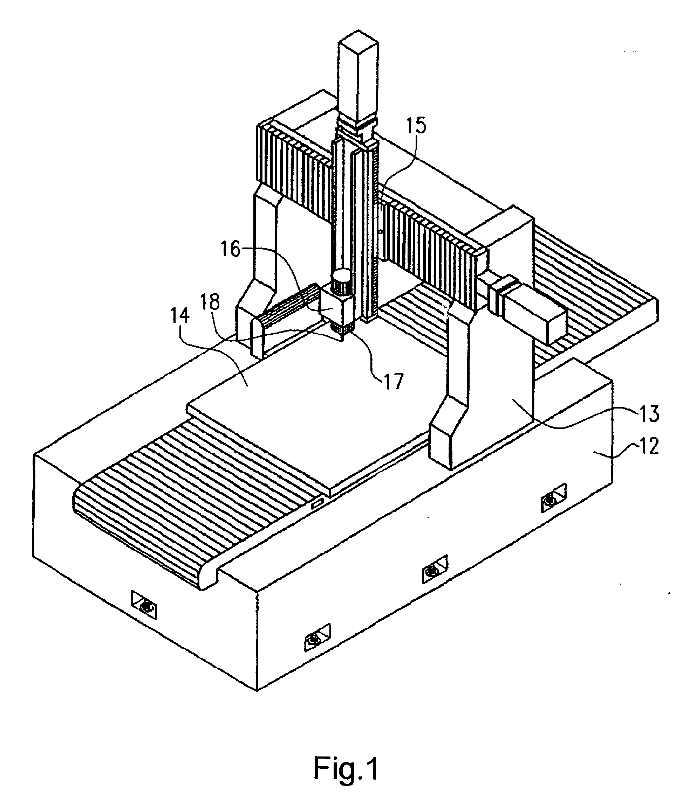

Die Fig. 1 zeigt in schematischer, perspektivischer Darstellung eine Werkzeugmaschine mit einem Maschinenbett 12, an welchem ein Portal 13 gelagert ist. An dem Maschinenbett 12 ist verfahrbar ein Tisch 14 gelagert, der ein nicht dargestelltes Werkstück tragen kann. Der Tisch 14 ist horizontal verfahrbar.

Das Portal 13 lagert einen Träger 15, welcher ebenfalls horizontal relativ zu dem Portal 13 verfahrbar ist. Die Bewegungsachse des Trägers 15 ist rechtwinklig zur Bewegungsachse des Tisches 14 angeordnet.

An dem Träger 15 ist vertikal verfahrbar mittels eines Bauteils 16 eine Spindel 17 gelagert, welche drehbar ist und ein Werkzeug 18 trägt.

Auf die Darstellung weiterer Details, beispielsweise der Antriebseinheiten oder ähnlichem, kann an dieser Stelle verzichtet werden, da diese aus dem Stand der Technik bekannt sind.

Der Tisch 14 ist mittels einer nicht im Einzelnen gezeigten hydrostatischen Führung 8 (siehe Fig. 2 und 3) an dem Maschinenbett 12 gelagert. In gleicher Weise ist der Träger 15 mittels einer hydrostatischen Führung an dem Portal 13 gelagert. Analoges gilt für die Lagerung des Bauteils 16 an dem Träger 15.

Die Fig. 2 und 3 zeigen jeweils vereinfachte SchnittDarstellungen der hydrostatischen Führungen 8, welche dazu dienen, ein erstes Bauteil 9 an einem zweiten Bauteil 10 verfahrbar zu lagern.

Die hydrostatische Führung 8 umfasst jeweils eine Tasche 1, welche über einen Zuflusskanal 7 mit Öl beaufschlagt wird. Die Tasche 1 ist von Stegen 11 begrenzt, welche zu der Fläche des zweiten Bauteils 10 einen Spalt 3 bilden, durch welchen das Öl austritt.

Der Zuflusskanal 7 ist mit einer Zuführleitung 6 für das Öl verbunden.

Bei dem in Fig. 2 gezeigten Ausführungsbeispiel ist ein Regelventil 4 vorgesehen, welchem ein Druckspeicher 5 vorgeschaltet ist. Stromab des Regelventils 4 ist eine Leitung 2 dargestellt, welche mit dem Zuflusskanal 7 verbunden ist. Durch Betätigung des Regelventils 4 ist es möglich, den Öldruck in der Tasche 1 bzw. das in die Tasche 1 eingeleitete Ölvolumen zu regeln.

Die Fig. 3 zeigt ein abgewandeltes Ausführungsbeispiel, welches auch mit dem in Fig. 2 gezeigten Ausführungsbeispiel kombinierbar ist. Hierbei ist im Bereich der Tasche 1 schematisch ein Piezoelement 19 dargestellt, durch welches das Volumen der Tasche 1 variabel ist. Durch eine Veränderung des Volumens mittels des Piezoelements 19 steigt der Öldruck in der Tasche 1, sodass sich ein höherer Öl-Volumenstrom durch den Spalt 3 ergibt. Hierdurch ist eine größere Belastung auf das erste Bauteil 9 kompensierbar.

Die Erfindung ist nicht auf die gezeigten Ausführungsbeispiele beschränkt, vielmehr ergeben sich im Rahmen der Erfindung vielfältige Abwandlungs- und Modifikationsmöglichkeiten. Die Erfindung bezieht sich auch auf hydrostatische Wellenlagerungen.

## Patentansprüche

1. Verfahren zur Schwingungsdämpfung in einer Werkzeugmaschine mit zumindest einer zumindest eine Tasche (1) aufweisenden hydrostatischen Führung (8) zur Lagerung eines ersten Bauteils (9) an einem zweiten Bauteil (10), durch welche ein Ölstrom mit vorgegebenem Volumenstrom und vorgegebenem Druck durchgeleitet wird und durch zumindest einen Spalt (3) austritt, wobei in Abhängigkeit von den auftretenden Belastungen zur Erzielung einer konstanten Breite des Spalts (3) der Ölstrom durch den Spalt (3) geregelt wird, **dadurch gekennzeichnet, dass** als Eingangsgröße Beschleunigungen von bauteilen (9, 10) berücksichtigt werden, dass die Belastungen der hydrostatischen Führung auf der Grundlage der aus den Bewegungen von Bauteilen und/oder Werkstücken resultierenden Beschleunigungen vorberechnet werden und dass in Abhängigkeit dieser Werte der zur Verhinderung von Änderungen der Spaltbreite benötigte Öldruck und/oder der Ölstrom durch den Spalt (3) vorberechnet wird.

2. Verfahren nach Anspruch 1, **dadurch gekennzeichnet, dass** der Ölstrom in der Tasche (1) geregelt wird.

3. Verfahren nach Anspruch 1 oder 2, **dadurch gekennzeichnet, dass** das Ölvolumen in der Tasche (1) geregelt wird.

4. Verfahren nach einem der Ansprüche 1 bis 3, **dadurch gekennzeichnet, dass** als Messgröße der Öldruck in der Tasche (1) zugrunde gelegt wird.

5. Verfahren nach einem der Ansprüche 1 bis 4, **dadurch gekennzeichnet, dass** als Messgröße die Breite des Spaltes (3) zugrunde gelegt wird.

6. Verfahren nach einem der Ansprüche 1 bis 5, **dadurch gekennzeichnet, dass** das Schwingungsverhalten der Werkzeugmaschine selbst berücksichtigt wird, indem der Öldruck in der Tasche (1) bzw. der Ölstrom durch den Spalt (3) zur Verhinderung von Änderungen der Spaltbreite vorbestimmt und entsprechend geregelt werden.

7. Verfahren nach einem der Ansprüche 1 bis 6, **dadurch gekennzeichnet, dass** der Öldruck bzw, die Breite des Spalts (3) mehrerer Taschen (1) mehrerer hydrostatischer Führungen mittels einer einzigen Regelung geregelt werden, um Bauteile und/oder Werkstücke hochsteif zu lagern.

8. Verfahren nach Anspruch 7, **dadurch gekennzeichnet, dass** die Regelung des Öldrucks bzw. der Breite des Spalts (3) zeitgleich mit einer Regelung zur Abarbeitung von Bearbeitungsprogrammen der Werkzeugmaschine erfolgt.

9. Verfahren nach Anspruch 7 oder 8, **dadurch gekennzeichnet, dass** die Regelung des Öldrucks bzw. der Breite des Spaltes (3) auftretende Verformungen von Bauteilen der Werkzeugmaschine kompensiert.

10. Verfahren nach einem der vorhergehenden Ansprüche, **dadurch gekennzeichnet, dass** der Öldruck und/oder der Ölstrom und/oder das Ölvolumen mehrerer Taschen (1) mehrerer hydrostatischer Führungen (8) einer Werkzeugmaschine mittels einer gemeinsamen Regelung geregelt werden.

11. Verfahren nach Anspruch 10, **dadurch gekennzeichnet, dass** die Regelung die einzelnen Taschen (1) unabhängig voneinander regelt.

12. Verfahren nach Anspruch 10 oder 11, **dadurch gekennzeichnet, dass** die Regelung zur aktiven Schwingungsdämpfung von Bauteilen der Werkzeugmaschine als Eingangsgrößen auftretende Schwingungen der Bauteile und/oder von Werkstücken verarbeitet.

13. Verfahren nach Anspruch 12, **dadurch gekennzeichnet, dass** die Schwingungen der Bauteile von außerhalb der Bauteile angeregte Schwingungen sind.

14. Verfahren nach Anspruch 12 oder 13, **dadurch gekennzeichnet, dass** die Schwingungen der Bauteile deren Eigenschwingungen sind.

15. Verfahren nach einem der Ansprüche 12 bis 14, **dadurch gekennzeichnet, dass** die auftretenden Schwingungen gemessen werden.

16. verfahren nach einem der Ansprüche 12 bis 14, **dadurch gekennzeichnet, dass** die auftretenden Schwingungen berechnet werden.

17. Verfahren zur Schwingungsdämpfung in einer Werkzeugmaschine mit zumindest einer zumindest eine Tasche (1) aufweisenden hydrostatischen Führung (8) zur Lagerung eines ersten Bauteils (9) an einem zweiten Bauteil (10), durch welche ein Ölstrom mit vorgegebenem Volumenstrom und vorgegebenem Druck durchgeleitet wird und durch zumindest einen Spalt (3) austritt, wobei in Abhängigkeit von den auftretenden Belastungen zur Erzielung einer konstanten Breite des Spalts (3) der Ölstrom durch den Spalt (3) geregelt wird, **dadurch gekennzeichnet, dass** der Öldruck und/oder der Ölstrom und/oder das Ölvolumen mehrerer Taschen (1) mehrerer hydrostatischer Führungen (8) einer Werkzeugmaschine mittels einer gemeinsamen Regelung geregelt werden und dass die Regelung als Eingangsgrößen Maßabweichungen der Führungen (8) verarbeitet und diese kompensiert, wobei die Maßabweichungen vorab gemessen, in einem Speicher abgelegt und die Messwerte während des Betriebs der Werkzeugmaschine der Regelung zugeleitet werden.

18. Verfahren nach Anspruch 17, **dadurch gekennzeichnet, dass** die Maßabweichungen berechnet werden.

19. Vorrichtung zur Durchführung des Verfahrens nach einem der Ansprüche 1 bis 9, mit einer mit der Tasche (1) verbundenen Zuführleitung (6), **gekennzeichnet durch** ein in der Zuführleitung (6) angeordnetes Regelventil (4).

20. Vorrichtung nach Anspruch 19, **gekennzeichnet durch** einen dem Regelventil (4) stromauf vorgeordneten Druckspeicher (5).

21. Vorrichtung zur Durchführung des Verfahrens nach einem der Ansprüche 1 bis 9 mit einer mit der Tasche (1) verbundenen Zuführleitung (6), **gekennzeichnet durch** im Bereich der Tasche (1) angeordnete Mittel zur Volumenänderung der Tasche (1).

22. Vorrichtung nach Anspruch 21, **dadurch gekennzeichnet, dass** die Mittel eine Kolben-Zylinder-Einheit umfassen.

23. Vorrichtung nach Anspruch 21 oder 22, **dadurch gekennzeichnet, dass** die Mittel zumindest ein Piezoelement (19) umfassen.

## Claims

1. A method for vibration damping in a machine tool comprising at least one hydrostatic guide (8) including at least one pocket (1) for supporting a first component (9) on a second component (10), through which an oil flow is passed with a predetermined volume flow and at a predetermined pressure and exits through at least one gap (3), wherein, in response to the loads arising and for achieving a constant width of gap (3), the oil flow through said gap (3) is regulated, **characterized in that** accelerations of the components (9, 10) are considered as input quantity, that the loads of the hydrostatic guide are pre-calculated on the basis of the accelerations resulting from the movements of components and/or workpieces, and that, in response to said values, the oil pressure and/or oil flow through the gap (3) that is required for preventing changes in the width of the gap is pre-calculated.

2. The method according to claim 1, **characterized in that** the oil flow in said pocket (1) is regulated.

3. The method according to claim 1 or 2, **characterized in that** the oil volume in said pocket (1) is regulated.

4. The method according to any one of claims 1 to 3, **characterized in that** as the measured variable, the oil pressure in said pocket (1) is taken as a basis.

5. The method according to any one of claims 1 to 4, **characterized in that** as the measured variable, the width of said gap (3) is taken as a basis.

6. The method according to any one of claims 1 to 5, **characterized in that** the vibration behavior of the machine tool itself is taken into account by predetermining and correspondingly regulating the oil pressure in said pocket (1) or the oil flow through said gap (3) for preventing changes in the width of said gap.

7. The method according to any one of claims 1 to 6, **characterized in that** the oil pressure and the width of said gap (3) of a plurality of pockets (1) of a plurality of hydrostatic guides are regulated by means of a single control unit to support components and/or workpieces in a highly stiff manner.

8. The method according to claim 7, **characterized in that** the oil pressure and the width of said gap (3) are regulated at the same time with a control unit for executing machining programs of said machine tool.

9. The method according to claim 7 or 8, **characterized in that** the control of the oil pressure and of the width of said gap (3) compensates deformations arising in components of the machine tool.

10. The method according to any one of the preceding claims, **characterized in that** the oil pressure and/or the oil flow and/or the oil volume of a plurality of pockets (1) of a plurality of hydrostatic guides (8) of a machine tool are regulated by means of a joint control unit.

11. The method according to claim 10, **characterized in that** said control unit controls the individual pockets (1) independently of one another.

12. The method according to claim 10 or 11, **characterized in that** the control unit for the active vibration damping of components of the machine tool processes vibrations arising in the components and/or workpieces as input quantities.

13. The method according to claim 12, **characterized in that** the vibrations of the components are vibrations excited outside the components.

14. The method according to claim 12 or 13, **characterized in that** the vibrations of the components are the natural vibrations thereof.

15. The method according to any one of claims 12 to 14, **characterized in that** the vibrations arising are measured.

16. The method according to any one of claims 12 to 14, **characterized in that** the vibrations arising are calculated.

17. A method for vibration damping in a machine tool comprising at least one hydrostatic guide (8) including at least one pocket (1) for supporting a first component (9) on a second component (10), through which an oil flow is passed with a predetermined volume flow and at a predetermined pressure and exits through at least one gap (3), wherein, in response to the loads arising and for achieving a constant width of gap (3), the oil flow through said gap (3) is regulated, **characterized in that** the oil pressure and/or oil flow and/or the oil volume of a plurality of pockets (1) of a plurality of hydrostatic guides (8) of a machine tool are regulated by means of a joint control unit and that the control unit processes and compensates dimensional deviations of said guides (8) as input quantities, wherein the dimensional deviations are measures in advance, stored in a memory and the measured values are supplied to the control unit during operation of the machine tool.

18. The method according to claim 17, **characterized in that** the dimensional deviations are calculated.

19. An apparatus for performing the method according to any one of claims 1 to 9, comprising a supply line (6) connected to the pocket (1), **characterized by** a control valve (4) arranged in said supply line (6).

20. The apparatus according to claim 19, **characterized by** a pressure reservoir (5) arranged upstream of said control valve (4).

21. The apparatus for performing the method according to any one of claims 1 to 9, comprising a supply line (6) connected to said pocket (1), **characterized by** a means arranged in the area of said pocket (1) for changing the volume of said pocket (1).

22. The apparatus according to claim 21, **characterized in that** said means comprises a piston-cylinder unit.

23. The apparatus according to claim 21 or 22, **characterized in that** said means comprises at least one piezoelectric element (19).

## Revendications

1. Procédé pour amortir les oscillations d'une machine-outil avec au moins un guidage hydrostatique (8) comportant au moins une poche (1), pour supporter un premier composant (9) sur un deuxième composant (10), à travers lequel est acheminé un courant d'huile avec un débit prédéfini et une pression prédéfinie, et qui sort par au moins une fente (3), le courant d'huile étant régulé à travers la fente (3) en fonction des charges se produisant pour obtenir une largeur constante de la fente (3), **caractérisé en ce qu'**on tient compte comme grandeur d'entrée des accélérations de composants (9, 10), **en ce que** les charges du guidage hydrostatique sont précalculées sur la base des accélérations résultant des mouvements de composants et/ou de pièces, et **en ce qu'**en fonction de ces valeurs on précalcule la pression d'huile et/ou le courant d'huile à travers la fente (3), nécessaires pour empêcher des variations de la largeur de la fente.

2. Procédé selon la revendication 1, **caractérisé en ce que** le courant d'huile est régulé dans la poche (1).

3. Procédé selon la revendication 1 ou 2, **caractérisé en ce que** le volume d'huile est régulé dans la poche (1).

4. Procédé selon l'une des revendications 1 à 3, **caractérisé en ce que** comme grandeur de mesure on se base sur la pression d'huile dans la poche (1).

5. Procédé selon l'une des revendications 1 à 4, **caractérisé en ce que** comme grandeur de mesure on se base sur la largeur de la fente (3).

6. Procédé selon l'une des revendications 1 à 5, **caractérisé en ce que** le comportement en oscillation de la machine-outil elle-même est pris en compte, **en ce que** la pression d'huile dans la poche (1) ou le courant d'huile à travers la fente (3) est prédéterminé et régulé en conséquence pour empêcher des variations de la largeur de la fente.

7. Procédé selon l'une des revendications 1 à 6, **caractérisé en ce que** la pression d'huile ou la largeur de la fente (3) de plusieurs poches de plusieurs guidages hydrostatiques est régulée au moyen d'une seule régulation, afin de supporter les composants et/ou les pièces de manière très rigide.

8. Procédé selon la revendication 7, **caractérisé en ce que** la régulation de la pression d'huile ou de la largeur de la fente (3) s'effectue en même temps qu'une régulation pour le traitement de programmes d'usinage de la machine-outil.

9. Procédé selon la revendication 7 ou 8, **caractérisé en ce que** la régulation de la pression d'huile ou de la largeur de la fente (3) compense des déformations produites au niveau des composants de la machine-outil.

10. Procédé selon l'une des revendications précédentes, **caractérisé en ce que** la pression d'huile et/ou le courant d'huile et/ou le volume d'huile de plusieurs poches de plusieurs guidages hydrostatiques (8) d'une machine-outil sont régulés au moyen d'une régulation commune.

11. Procédé selon la revendication 10, **caractérisé en ce que** la régulation régule les différentes poches (1) indépendamment les unes des autres.

12. Procédé selon la revendication 10 ou 11, **caractérisé en ce que** la régulation pour l'amortissement actif des oscillations de composants de la machine-outil traite, comme grandeurs d'entrée, des oscillations se produisant au niveau des composants et/ou de pièces.

13. Procédé selon la revendication 12, **caractérisé en ce que** les oscillations des composants sont des oscillations provoquées à l'extérieur des composants.

14. Procédé selon la revendication 12 ou 13, **caractérisé en ce que** les oscillations des composants sont leurs oscillations propres.

15. Procédé selon l'une des revendications 12 à 14, **caractérisé en ce que** les oscillations se produisant sont mesurées.

16. Procédé selon l'une des revendications 12 à 14, **caractérisé en ce que** les oscillations se produisant sont calculées.

17. Procédé pour amortir les oscillations d'une machine-outil avec au moins un guidage hydrostatique (8) comportant au moins une poche (1), pour supporter un premier composant (9) sur un deuxième composant (10), à travers lequel est acheminé un courant d'huile avec un débit prédéfini et une pression prédéfinie, et qui sort par au moins une fente (3), le courant d'huile étant régulé à travers la fente (3) en fonction des charges se produisant pour obtenir une largeur constante de la fente (3), **caractérisé en ce** la pression d'huile et/ou le courant d'huile et/ou le volume d'huile de plusieurs poches (1) de plusieurs guidages hydrostatiques (8) d'une machine-outil sont régulés au moyen d'une régulation commune et en ce que la régulation traite comme grandeurs d'entrée des écarts de cote des guidages (8), et compense ceux-ci, les écarts de cote étant mesurés au préalable, enregistrés dans une mémoire et les valeurs de mesure sont acheminées à la régulation pendant le fonctionnement de la machine-outil.

18. Procédé selon la revendication 17, **caractérisé en ce que** les écarts de cote sont calculés.

19. Dispositif pour la mise en oeuvre du procédé selon l'une des revendications 1 à 9, avec une conduite d'amenée (6) reliée à la poche (1), **caractérisé par** une soupape de régulation (4) disposée dans la conduite d'amenée (6).

20. Dispositif selon la revendication 19, **caractérisé par** un accumulateur de pression (5) disposé en amont de la soupape de régulation (4).

21. Dispositif pour la mise en oeuvre du procédé selon l'une des revendications 1 à 9 avec une conduite d'amené (6) reliée à la poche (1), **caractérisé par** des moyens, disposés dans la zone de la poche (1), pour modifier le volume de la poche (1).

22. Dispositif selon la revendication 21, **caractérisé en ce que** les moyens comprennent une unité à cylindre et piston.

23. Dispositif selon la revendication 21 ou 22, **caractérisé en ce que** les moyens comprennent au moins un élément piézo-électrique (19).
